# EUROPEAN PATENT SPECIFICATION

(11) **EP 3 130 133 B1**
(45) Date of publication and mention of the grant of the patent: **06.11.2019**
(21) Application number: 14717135.9
(22) Date of filing: 11.04.2014
(51) Int. Cl.: H04L 12/46, H04L 29/12, H04L 12/715, H04L 12/24

(54) **MULTI TENANCY IN SOFTWARE DEFINED NETWORKING**
MEHRERE TEILNEHMER IN SOFTWAREDEFINIERTER VERNETZUNG
LOCATAIRES MULTIPLES DANS UN RÉSEAUTAGE DÉFINI PAR LOGICIEL

(43) Date of publication of application: 15.02.2017
(73) Proprietor: Nokia Solutions and Networks GmbH & Co. KG, 81541 München (DE)
(72) Inventor: HOFFMANN, Klaus, 80995 Munich (DE)
(74) Representative: Nokia EPO representatives
(86) International application number: PCT/EP2014/057407
(87) International publication number: WO 2015/154821

(56) References cited:
- CN-A- 103 248 724
- SATHIASEELAN ARJUNA ET AL: "Virtual Public Networks", 2013 SECOND EUROPEAN WORKSHOP ON SOFTWARE DEFINED NETWORKS, IEEE, 10 October 2013 (2013-10-10), pages 1-6, XP032529486, DOI: 10.1109/EWSDN.2013.7 [retrieved on 2013-12-09]
- "SDN Architecture Overview", , 12 December 2013 (2013-12-12), XP055139949, Retrieved from the Internet: URL:http://www.opennetworking.org/images/s tories/downloads/sdn-resources/technical-r eports/SDN-architecture-overview-1.0.pdf [retrieved on 2014-09-12]
- ALISA DEVLIC ET AL: "A Use-Case Based Analysis of Network Management Functions in the ONF SDN Model", SOFTWARE DEFINED NETWORKING (EWSDN), 2012 EUROPEAN WORKSHOP ON, IEEE, 25 October 2012 (2012-10-25), pages 85-90, XP032283475, DOI: 10.1109/EWSDN.2012.11 ISBN: 978-1-4673-4554-5
- DMITRY DRUTSKOY ET AL: "Scalable Network Virtualization in Software-Defined Networks", IEEE INTERNET COMPUTING, INSTITUTE OF ELECTRICAL AND ELECTRONICS ENGINEERS, US, vol. 17, no. 2, 1 March 2013 (2013-03-01), pages 20-27, XP011498339, ISSN: 1089-7801, DOI: 10.1109/MIC.2012.144

## Description

### BACKGROUND OF THE INVENTION

### Field of the invention

The present invention relates to multi tenancy in software defined networking (SDN).

### Related background Art

The following meanings for the abbreviations used in this specification apply:
- API: application programming interface
- ATM: asynchronous transfer mode
- BRAS: broadband remote access server
- CP: control plane
- DHCP: dynamic host configuration protocol
- eNB: evolved nodeB
- EPC: evolved packet core
- ForCES: forwarding and control element separation
- GPRS: general packet radio service
- GTP: GPRS tunneling protocol
- ID: identifier
- IP: internet protocol
- L: layer
- MME: mobility management entity
- NB: northbound
- NE: network element
- NFV: network functions virtualisation
- OF: openflow
- OFC: openflow controller
- PCE: path computation element
- PDN: packet data network
- P-GW: PDN gateway
- PIP: protective IP
- RAN: radio access network
- RAT: radio access technology
- SDN: software defined networking
- S-GW: serving gateway
- TEID: tunnel endpoint ID
- UDP: user datagram protocol
- VNP: virtual network provider
- VNO: virtual network operator

The basic idea of SDN is the decoupling of the control plane from the data forwarding plane, which enables a programmable central control of network traffic flows over standardized protocols like openflow. While SDN is in principle independent of the concepts for virtualization/cloud, an SDN control layer can be offered as services in the cloud.

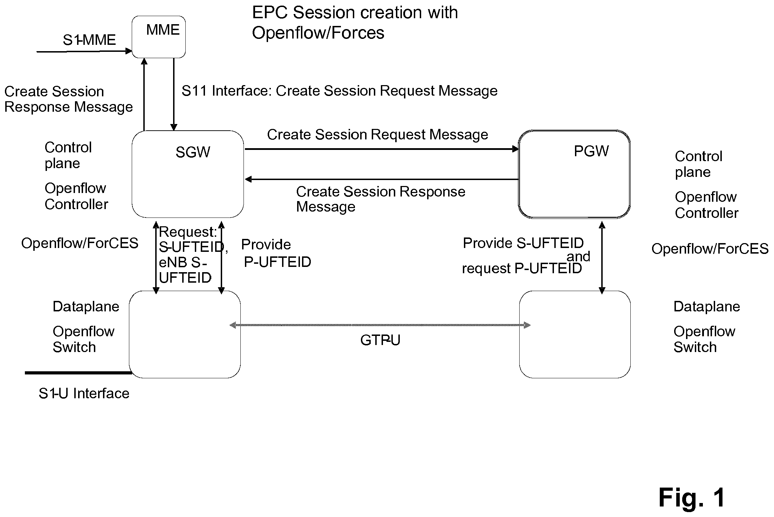

Fig. 1 shows an architecture which mainly separates CP and UP functions of a P-GW and S-GW further into a P-GW user/data plane (P-GW-U) and a P-GW control plane (P-GW-C) and respectively into S-GW-U and S-GW-C. P-GW-U/S-GW-U can be seen as packet forwarding entities in the transport plane while P-GW-C/S-GW-C may be implemented as virtualized control processes with several instances running in the cloud. In a non-roaming environment, S-GW-C and P-GW-C, S-GW-U and P-GW-U can either be separated or co-located. Fig. 1 shows separated S/P-GW control and user plane functions.

Multi tenancy refers to a principle in software architecture where a single or multiple instances of the software runs on a shared server, serving multiple client-organizations (tenants). In a multi tenancy environment, multiple customers share the same server and/or application, running on the same operating system, on the same hardware, with the same data-storage mechanism.

The article by DMITRY DRUTSKOY ET AL: "Scalable Network Virtualization in Software-Defined Networks", IEEE INTERNET COMPUTING, INSTITUTE OF ELECTRICAL AND ELECTRONICS ENGINEERS, US, vol. 17, no. 2, 1 March 2013, pages 20-27, XP011498339, ISSN:1089-7801, DOI:10.1109/MIC.2012.144, relates to scalable network virtualization in SDNs. Network virtualization gives each "tenant" in a data center its own network topology and control over its traffic flow. Software-defined networking offers a standard interface between controller applications and switch-forwarding tables, and is thus a natural platform for network virtualization. Yet, supporting numerous tenants with different topologies and controller applications raises scalability challenges. The FlowN architecture gives each tenant the illusion of its own address space, topology, and controller, and leverages database technology to efficiently store and manipulate mappings between virtual networks and physical switches.

The article by ALISA DEVLIC ET AL: "A Use-Case Based Analysis of Network Management Functions in the ONF SDN Model", SOFTWARE DEFINED NETWORKING (EWSDN), 2012 EUROPEAN WORKSHOP ON, IEEE, 25 October 2012, pages 85-90, XP032283475, DOI: 10.1109/EWSDN.2012.11 ISBN: 978-1-4673-4554-5, describes applying SDN to the carrier domain. As a specific use-case a virtualized carrier network shared by multiple customers is considered. Proposed extensions to the ONF SDN model include control network bootstrapping considerations, updates to the SDN and NOS model, and extensions of the OF-config management data model.

### SUMMARY OF THE INVENTION

According to some embodiments, the present invention provides a method, system and a computer program product for supporting multi tenancy in SDN, as defined in the appended claims.

In the following the invention will be described by way of embodiments thereof with reference to the accompanying drawings.

### BRIEF DESCRIPTION OF THE DRAWINGS

Fig. 1 shows a schematic diagram illustrating an example of an architecture of separated S/P-GW control and user plane functions in SDN.
Fig. 2 shows a schematic diagram illustrating an example of an IP address allocation that is performed in a P-GW-C part of a virtual network system.
Fig. 3 shows a schematic diagram illustrating an example of an IP address allocation that is performed in an openflow controller of a virtual network system according to an implementation example of the invention.
Fig. 4 shows a signaling diagram illustrating an example of a signaling between a processing entity, an SDN control entity and a serving entity according to an embodiment of the invention.
Fig. 5 shows a schematic block illustrating an example of a configuration of a control unit in which examples of embodiments of the invention are implementable.

### DESCRIPTION OF THE EMBODIMENTS

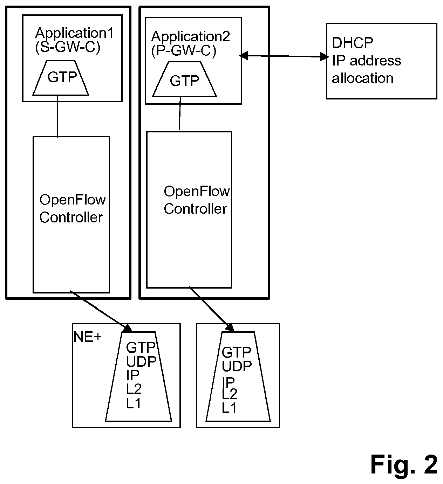

Today's integrated P-GWs or semi-integrated P-GWs which are decomposed into user plane and control plane, but not into a third openflow controller, retrieve an IP address for a mobile user, as illustrated in Fig. 2.

Fig. 2 shows a schematic diagram illustrating an example of an IP address allocation that is performed in a P-GW-C part of a virtual network system. The virtual network system comprises two openflow controllers, respectively accessed, using a GPRS tunneling protocol (GTP), by an application 1 processed by an S-GW-C and an application 2 processed by the P-GW-C. According to Fig. 2, the P-GW-C performs DHCP IP address allocation by communicating with a corresponding server dedicated to a virtual network operator associated with the application 2. The openflow controllers each are connected to network elements using for instance GTP, UDP, IP, L2 or L1 protocol. According to Fig. 2, any VNO may have its own dedicated DHCP server allocating its own IP addresses as required from its reserved address range.

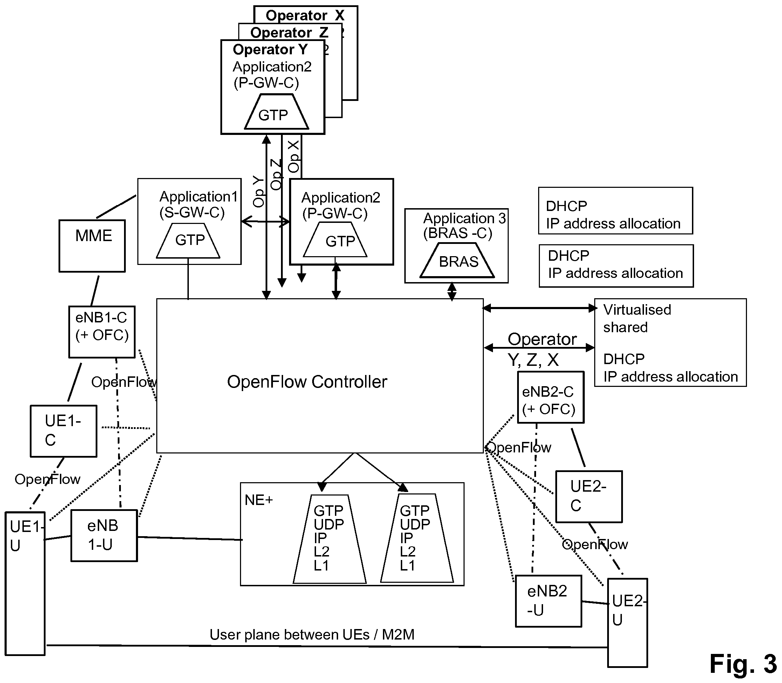

Instead of keeping the allocation procedure, such as the DHCP procedure or a procedure from a radius/diameter server, in the P-GW-C, according to some embodiment of the present invention, the P-GW-C and also any BRAS-C are made protocol and topology independent by moving, e.g., the DHCP allocation procedure from the P-GW-C to an openflow controller, as illustrated in Fig. 3. Fig. 3 shows a schematic diagram illustrating an example of an IP address allocation that is performed in the openflow controller of a virtual network system according to an implementation example of the invention.

The virtual network system of Fig. 3 comprises the openflow controller which is accessed by an application 1 processed by an S-GW-C, using a GPRS tunneling protocol (GTP), an application 2 processed by the P-GW-C, using the GTP, and an application 3 processed by the BRAS-C, using a BRAS protocol. The openflow controller is connected to a network element using GTP, UDP, IP, L2 or L1 protocol.

A UE1 (i.e. a user equipment/device/circuitry and/or a user application) shown on the left hand side in Fig. 3 accesses the virtual network system via an eNB1 (eNodeB) having separated control and user planes as has the UE1. The control plane of the eNB1 (i.e. the eNB1-C) connects the control plane of the UE1 (i.e. the UE1-C) via an MME to the S-GW-C. The user plane of the eNB1 (i.e. the eNB1-U) connects the user plane of the UE1 (i.e. the UE1-U) to the network element. The UE1-U, UE1-C, eNB1-U, eNB1-C are connected to the openflow controller via the openflow protocol. It is to be noted that the invention is not limited to a single openflow controller as depicted in Fig. 3, and there may be several openflow controllers which are responsible for different domains/specific functions. For example, there may be an openflow controller which is responsible for connecting the UE to the virtual network system, as indicated by '+OFC' of the eNB1-C.

Fig. 3 shows a further UE2 (i.e. a user equipment/device/circuitry and/or a user application) on the right hand side which connects to the virtual network system via an eNB2 (e.g. an eNodeB). The UE2 and the eNB2 have separated control and user planes.

Fig. 3 further shows a direct communication between the UEs UE1 and UE2 via their user planes UE1-U and UE2-U. In other words, a machine-to-machine (M2M) tunnel is established.

The virtual network system shows a virtualized shared DHCP IP address allocation which is performed by the openflow controller as will be described in more detail below.

UE addressing is not limited to DHCP, and ATM or any future address allocation protocol can be used for addressing the UE.

To make the applications like the PGW-C and BRAS-C truly independent from the underlying transport topology it is advantageous to let the openflow controller serve the applications instead of placing it into the PGW-C application layer for every virtual operator.

In order to support multi tenancy it is therefore suggested that the application implicitly or explicitly request the underlying enhanced openflow controller to perform a specific function (e.g. IP address allocation for the UE1), and additionally indicate an identification of a virtual network operator (VNO) associated with the application.

As the IP address for the UE1 will be allocated together with an allocation of e.g. a GTP tunnel, the address allocation can preferably be carried along with a NB API and/or SDN messages like MOD-Flow or ADD-Flow, which are exchanged between the application and the openflow controller in order to setup a GTP tunnel or IP tunnel, etc.

As can be seen from Fig. 3, also a network to network tunnel is possible, e.g. between PGW and SGW, also between eNB and SGW or between SGSN and SGW, etc. It is also possible to set up a tunnel between UEs, as described above.

In turn, the openflow controller then queries a server, e.g., a DHCP server (virtualized/centralized/shared) with the indication for which VNO the IP address allocation is to be performed. In other words, according to the implementation example of Fig. 3, the openflow controller performs virtualised shared DHCP IP address allocation based on the identification of operator X, Y, Z for application 1, 2, 3.

It is to be noted that the query to the DHCP is again also just one example of one particular query, and the invention is not limited thereto.

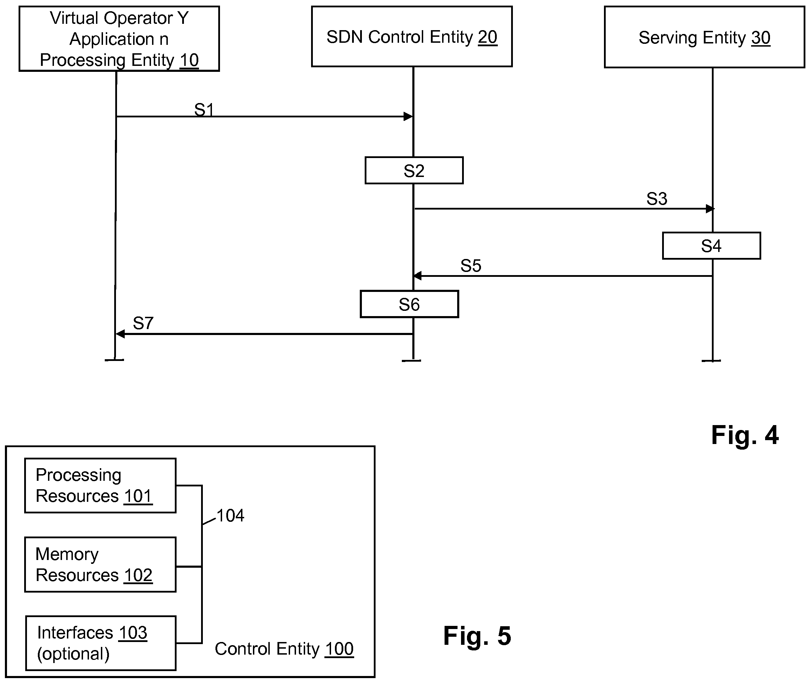

Fig. 4 shows a signaling diagram illustrating an example of a signaling between a entity 10, an SDN control entity 20 and a serving entity 30 according to an embodiment of the invention. The processing entity 10 processes an application n which is associated with an operator Y.

The term "entity" comprises a device/circuitry, e.g. a not virtualized device/circuitry, and/or an application/software, e.g. a virtualized application/software in a datacenter.

According to an implementation example of the invention, the processing entity 10 comprises the P-GW-C shown in Fig. 3. However, the processing entity 10 is not limited thereto, and may further comprise an S-GW-G and BRAS-C, etc.

According to an implementation example of the invention, the SDN control entity 20 comprises the openflow controller shown in Fig. 3, and the serving entity 30 comprises the virtualized shared DHCP IP address allocation shown in Fig. 3.

In step S1 in Fig. 4, the processing entity 10 requests the SDN control entity 20 to perform a specific function for the application n, and indicates an identification (ID) of the virtual network operator Y to the SDN control entity 20. For example, the specific function is an address allocation for a user equipment, e.g. the UE1 shown in Fig. 3. Alternatively or in addition, the specific function is an address allocation for a network entity of the virtual network system.

According to an implementation example, the requesting and indicating of step S1 is performed together with exchanging messages between the processing entity 10 and the SDN control entity 20 for setting up a tunnel between the UE1 and the service.

In step S2, the SDN control entity 20 receives the request to perform the specific function for the application n and the identification of the virtual network operator Y associated with the application n, and performs the specific function based on the identification of the virtual network operator Y. For example, the SDN control entity 20 performs the specific function based on the identification of the virtual network operator Y by communicating with the serving entity 30 in step S3.

According to an embodiment of the invention, a wrapper interface/protocol is introduced, which is set up between the SDN control entity 20 and the serving entity 30, e.g. DHCP, DNS, and PCE server, Diameter, H.248, etc. As a result it can be avoided that each protocol related to the serving entity 30 needs to be modified by adding a VNO ID to that particular protocol, but by adding the VNO ID (and further information to be added to the protocol due to evolvements of SDN environment) to the wrapper/container protocol instead. For instance, the SDN control entity 20 sets up e.g. a DHCP request or DNS request and includes content data into the wrapper protocol with also adding/pre-pending at least the VNO ID. In turn the serving entity 30 such as the DHCP and DNS server, PCE, etc., is also encapsulated such that there is a "dispatcher" which distributes the wrapped query together with the VNO ID to the correct instance. In turn the queried serving entity 30 performs a similar action as described for the SDN control entity 20 when creating the response to the query received, or when creating a request on its own. The SDN control entity 20 then dispatches and receives the response in a similar way.

Referring to Fig. 4, in step S4 the serving entity 30 processes the query from the SDN control entity 20 received in step S3, and returns a response to the query to the SDN control entity 20 in step S5. According to an example embodiment of the invention, the communication between the SDN control entity 20 and the serving entity 30 is performed based on the wrapper/container interface/protocol described above.

With the above implementation, the impact to existing servers are restricted to the minimum, if not completely avoided.

Additionally, the SDN control entity 20 can, based on the receipt of a response of any serving entity, evaluate the outcome (step S6 in Fig. 4) and is able to determine which additional serving entity is to be queried/involved for the service.

Regardless of which service has been triggered, the related information, in the implementation example of Fig. 3 for instance the IP address for the UE1, is handed over to the application of the VNO requesting the service (application n of VNO Y in Fig. 3) via a northbound API (e.g. OpenFlow or ForCES, H.248, etc.). Referring to Fig. 4, in step S7 the SDN control entity 20 responds to the request from the processing entity 10.

According to an example embodiment of the invention, the mechanism of the wrapper protocol/interface (and the addition of the VNO ID or a representation of it) as described above is applied also for the application requesting the service, e.g. the processing entity 10 (e.g. the PGW-C for the IP allocation as shown in Fig. 3).

With this approach, existing protocols can be reused as a northbound interface between the processing entity 10 and the SDN control entity 20.

The introduction of a virtualized DHCP server and the placement of the address allocation on SDN control layer as illustrated in Fig. 3 allows also a flexible support/request of IP addresses. For instance if one VNO of a group of VNOs hosted by the SDN control entity 20 does not need the IP addresses of its traditionally pre-reserved addresses as currently done in legacy equipment, the virtualized DHCP server (serving entity 30) /SDN control entity 20 may provide those spare IP addresses to a VNO, which is looking for IP address resources as the address ranges of the involved may have been pooled.

In the final stage it will be highly beneficial to have an independent application by removing completely any knowledge and dependencies to IP addresses, TElDs (GTP), topology or the like from the higher layer application. For instance, the higher layer application connected via NB to the OpenFlow controller (SDN control entity 20) can simply indicate its application (number, ID) to the underlying controller together with the ID of the VNO (virtual network operator) to delegate the lower level function by abstraction to the OpenFlow Controller (SDN control entity 20).

The IP address allocation is just one implementation example of the invention. At least according to some embodiments of the invention it is possible to make an application (BRAS-C or PGW -C) truly independent from the underlying transport network and any allocation procedure.

Furthermore, even the generic address allocation is again only an implementation example of the invention for a more general wider family of applications like for instance the DNS and PCE.

The DHCP service, since directly attached to the OpenFlow Controller is, of course, an application in the sense of the SDN. As such the DHCP interface will be a NB interface, which does not need to be an API directly residing on top of the OF controller.

OpenFlow is just an implementation example of the invention for the interface between the higher layer application and the underlying SDN control entity 20. ForCES can also be used for this purpose.

With the introduction of a wrapper protocol/interface carrying at least the VNO ID and the corresponding inner protocol, a more or less generic northbound interface can be introduced, instead of defining an NB API, because the existing protocol can be easily reused, and the wrapper is a means for exchanging the underlying protocol, which avoids unwanted impacts on existing applications.

According to an implementation example of the invention, the wrapper protocol looks like the following:

| |
|---|
| Wrapper Header |
| Pre-pending packet |
| Payload packet |

The payload packet contains the packets as for instance the DHCP protocol packets.

The pre-pending packet contains for instance at least the VNO ID to differentiate between several virtual network operators and may be optionally augmented with further indications as required.

The wrapper header constitutes the wrapper protocol to carry the existing protocol packets (like for instance the DHCP, DNS or PCEP packets).

Now reference is made to Fig. 5 for illustrating a simplified block diagram of an example of a control entity 100 that is suitable for use in practicing the example embodiments of this invention. The processing entity 10 and the SDN control entity 20 each may comprise and/or use a control entity such as the control entity 100.

The control entity 100 comprises processing resources 101, memory resources 102 storing a program, and optionally interfaces 103, which are connected via a link 104. The program is assumed to include program instructions that, when executed by the processing resources 101, enable the control unit 100 to operate in accordance with the example embodiments of this invention, as detailed above.

In general, the example embodiments of this invention may be implemented by computer software stored in the memory resources 102 and executable by the processing resources 101, or by hardware, or by a combination of software and/or firmware and hardware.

The memory resources 102 may comprise one or more memories of any type suitable to the local technical environment and may be implemented using any suitable data storage technology, such as semiconductor-based memory devices, magnetic memory devices and systems, optical memory devices and systems, fixed memory and removable memory. The processing resources 101 may comprise one or more processors of any type suitable to the local technical environment, and may include one or more of general purpose computers, special purpose computers, microprocessors, digital signal processors (DSPs) and processors based on a multi-core processor architecture, as non-limiting examples.

According to an aspect of the invention, a processing entity for accessing a software defined networking (SDN) control entity of a virtual network system is provided. According to an embodiment of the invention, the processing entity comprises the processing entity 10 shown in Fig. 4. According to an implementation example of the invention, the processing entity comprises and/or uses a control entity such as the control entity 100 of Fig. 5.

According to an implementation example of the invention, the processing entity comprises a processing device/processing circuitry. Alternatively or in addition, the processing entity comprises a processing application.

According to an implementation example of the invention, the SDN control entity comprises an SDN control device/SDN control circuitry. Alternatively or in addition, the SDN control entity comprises an SDN control application.

The processing entity comprises means for requesting the SDN control entity to perform a specific function for an application processed by the processing entity, and means for indicating an identification of a virtual network operator associated with the application to the SDN control entity.

According to an implementation example of the invention, the specific function is an address allocation for a user entity. Alternatively or in addition, the specific function is an address allocation for a network entity.

According to an implementation example of the invention, the network entity comprises a network device/network circuitry, and the user entity comprises a user device/user circuitry. Alternatively or in addition, the network entity comprises a network application and the user entity comprises a user application.

According to an implementation example of the invention, user plane and control plane are separated in the processing entity and/or the user entity and/or the network entity.

According to an implementation example of the invention, the means for requesting and the means for indicating comprise the requesting and indicating together with exchanging messages between the processing entity and the SDN control entity for setting up a tunnel between the user entity and another user entity and/or for setting up a tunnel between the user entity and the network entity and/or for setting up a tunnel between the network entity and another network entity.

According to an implementation example of the invention, the processing entity comprises means for including the request to perform the specific function and the identification of the virtual network operator into packets of a specific protocol.

According to an implementation example of the invention, the means for requesting, indicating and including are implemented by the processing resources 101, memory resources 102 and, optionally, the interfaces 103 of the control entity 100.

According to another aspect of the invention, a software defined networking (SDN) control entity of a virtual network system is provided. According to an embodiment of the invention, the SDN control entity comprises the SDN control entity 20 shown in Fig. 4. According to an implementation example of the invention, the SDN control entity comprises and/or uses a control entity such as the control entity 100 of Fig. 5.

According to an implementation example of the invention, the SDN control entity comprises an SDN control device/SDN control circuitry. Alternatively or in addition, the SDN control entity comprises an SDN control application.

The SDN control entity comprises means for receiving a request to perform a specific function for an application processed by a processing entity, the request indicating an identification of a virtual network operator associated with the application, and means for performing the specific function based on the identification of the virtual network operator.

According to an implementation example of the invention, the specific function is an address allocation for a user entity. Alternatively or in addition, the specific function is an address allocation for a network entity.

According to an implementation example of the invention, the network entity comprises a network device/network circuitry, and the user entity comprises a user device/user circuitry. Alternatively or in addition, the network entity comprises a network application and the user entity comprises a user application.

According to an implementation example of the invention, the means for receiving comprise receiving the request to perform the specific function and the identification of the virtual network operator in packets of a specific protocol.

According to an implementation example of the invention, the means for performing the specific function based on the identification of the virtual network operator comprise means for communicating with a serving entity providing the specific function based on the specific protocol.

According to an implementation example of the invention, the serving entity comprises a serving device/serving circuitry. Alternatively or in addition, the serving entity comprises a serving application.

According to an implementation example of the invention, the means for receiving, performing and communicating are implemented by the processing resources 101, memory resources 102 and, optionally, the interfaces 103 of the control entity 100.

It is to be understood that the above description is illustrative of the invention and is not to be construed as limiting the invention. Various modifications and applications may occur to those skilled in the art without departing **from the scope of the invention** as defined by the appended claims.

## Claims

1. A method for supporting multi-tenancy in software defined networking, SDN, the method comprising:
sending a request (S1), by a processing entity (10), to an SDN control entity (20) of a virtual network system, to perform a specific function for an application processed by the processing entity (10), wherein an existing protocol to invoke the specific function is re-used as interface between the processing entity (10) and the SDN control entity (20); and
indicating (S1), by the processing entity (10), an identification of a virtual network operator associated with the application to the SDN control entity (20);
receiving (S1), by the SDN control entity (20), said request;
performing (S2), by the SDN control entity (20), the specific function based on the identification of the virtual network operator,
wherein the SDN control entity (20) includes the request and the identification of the virtual network operator in a wrapper protocol between the SDN control entity (20) and a serving entity (30) providing the specific function, and communicates the request included in the wrapper protocol to the serving entity (30);
receiving (S3) and processing (S4), by the serving entity (30), the request included in the wrapper protocol;
returning (S5), by the serving entity (30) to the SDN control entity (20), a response to the request using the wrapper protocol;
receiving (S5), by the SDN control entity (20), the response using the wrapper protocol;
evaluating (S6), by the SDN control entity (20), the response; and
after having evaluated the response, responding (S7), by the SDN control entity (20), to the request received from the processing entity (10).

2. The method of claim 1, wherein
the specific function is an address allocation for a user entity according to at least one of DHCP and ATM.

3. The method of claim 2, wherein the sending and indicating is performed together with exchanging messages between the processing entity (10) and the SDN control entity (20) for setting up a tunnel between the user entity and another user entity.

4. The method of claim 1, wherein
the specific function is an address allocation for a network entity.

5. The method of claim 4, wherein the sending and indicating is performed together with exchanging messages between the processing entity (10) and the SDN control entity (20) for setting up a tunnel between the network entity and another network entity.

6. The method of claim 1, wherein the specific function is an address allocation for a user entity according to at least one of DHCP and ATM and for a network entity.

7. The method of claim 6, wherein the sending and indicating is performed together with exchanging messages between the processing entity (10) and the SDN control entity (20) for setting up a tunnel between the user entity and the network entity.

8. The method of any one of claims 1 to 7, wherein
payload of the wrapper protocol comprises at least one of DHCP packets, DNS protocol packets and PCEP packets.

9. The method of any one of claims 1 to 8, wherein user plane and control plane are separated in the processing entity.

10. A computer program product including a program for a processing device, said program comprising software code portions causing the processing device to perform the steps of any one of claims 1 to 9 when the program is run on the processing device.

11. The computer program product according to claim 10, wherein the computer program product comprises a computer-readable medium on which the software code portions are stored.

12. The computer program product according to claim 10, wherein the program is directly loadable into an internal memory of the processing device.

13. A system for supporting multi-tenancy in software defined networking, SDN, the system comprising a processing entity (10), an SDN control entity (20) and a serving entity (30), wherein
the processing entity (10) comprises:
means for sending a request to an SDN control entity (20) of a virtual network system, to perform a specific function for an application processed by the processing entity (10), wherein an existing protocol to invoke the specific function is re-used as interface between the processing entity (10) and the SDN control entity (20); and
means for indicating an identification of a virtual network operator associated with the application to the SDN control entity (20),
the SDN control entity comprises:
means for receiving the request; and
means for performing the specific function based on the identification of the virtual network operator,
wherein the SDN control entity (20) is configured to include the request and the identification of the virtual network operator in a wrapper protocol between the SDN control entity (20) and the serving entity (30) providing the specific function, and communicate the request included in the wrapper protocol to the serving entity (30),
wherein the serving entity (30) is configured to receive and process the request included in the wrapper protocol, and return a response to the request to the SDN control entity (20) using the wrapper protocol, and
wherein the SDN control entity (20) is configured to receive the response using the wrapper protocol, evaluate the response and, after having evaluated the response, respond to the request received from the processing entity (10).

14. The system of claim 13, wherein
the specific function is an address allocation for a user entity according to at least one of DHCP and ATM, and
the means for sending and the means for indicating comprise the sending and indicating together with exchanging messages between the processing entity (10) and the SDN control entity (20) for setting up a tunnel between the user entity and another user entity.

15. The system of claim 13, wherein
the specific function is an address allocation for a network entity, and
the means for sending and the means for indicating comprise the sending and indicating together with exchanging messages between the processing entity (10) and the SDN control entity (20) for setting up a tunnel between the network entity and another network entity.

16. The system of claim 13, wherein
the specific function is an address allocation for a user entity according to at least one of DHCP and ATM and for a network entity, and
the means for sending and the means for indicating comprise the sending and indicating together with exchanging messages between the processing entity (10) and the SDN control entity (20) or for setting up a tunnel between the user entity and the network entity.

17. The system of any one of claims 13 to 16, wherein
the serving entity is at least one of a DHCP server, DNS, PCE server, Diameter server and H.248 server.

18. The system of any one of claims 13 to 17, wherein
the processing entity (10) comprises a processing device and/or application, and/or
the SDN control entity (20) comprises an SDN control device and/or application, and/or
the network entity comprises a network device and/or application, and/or
the user entity comprises a user device and/or application, and/or
the serving entity (30) comprises a serving device and/or application.

## Patentansprüche

1. Verfahren zum Unterstützen von Mandantenfähigkeit in einer softwaredefinierten Vernetzung, SDN, wobei das Verfahren Folgendes umfasst:
Senden einer Anforderung (S1) durch eine Verarbeitungsentität (10) an eine SDN-Steuerentität (20) eines virtuellen Netzsystems, um eine spezifische Funktion für eine Anwendung auszuführen, die durch die Verarbeitungsentität (10) verarbeitet wird, wobei ein existierendes Protokoll, um die spezifische Funktion aufzurufen, als Schnittstelle zwischen der Verarbeitungsentität (10) und der SDN-Steuerentität (20) wiederverwendet wird; und
Angeben (S1) durch die Verarbeitungsentität (10) einer Identifizierung eines Betreibers eines virtuellen Netzes, der der Anwendung zugeordnet ist, für die SDN-Steuerentität (20);
Empfangen (S1) durch die SDN-Steuerentität (20) der Anforderung;
Ausführen (S2) durch die SDN-Steuerentität (20) der spezifischen Funktion anhand der Identifizierung des Betreibers des virtuellen Netzes,
wobei die SDN-Steuerentität (20) die Anforderung und die Identifizierung des Betreibers des virtuellen Netzes in einem Wrapper-Protokoll zwischen der SDN-Steuerentität (20) und einer dienenden Entität (30), die die spezifische Funktion bereitstellt, enthält und die Anforderung, die in dem Wrapper-Protokoll enthalten ist, an die dienende Entität (30) kommuniziert;
Empfangen (S3) und Verarbeiten (S4) durch die dienende Entität (30) der Anforderung, die in dem Wrapper-Protokoll enthalten ist;
Zurückgeben (S5) durch die dienende Entität (30) an die SDN-Steuerentität (20) einer Antwort auf die Anforderung unter Verwendung des Wrapper-Protokolls;
Empfangen (S5) durch die SDN-Steuerentität (20) der Antwort unter Verwendung des Wrapper-Protokolls;
Beurteilen (S6) durch die SDN-Steuerentität (20) der Antwort; und
nachdem sie die Antwort beurteilt hat, Antworten (S7) durch die SDN-Steuerentität (20) auf die von der Verarbeitungsentität (10) empfangene Antwort.

2. Verfahren nach Anspruch 1, wobei
die spezifische Funktion eine Adressenzuteilung für eine Anwenderentität gemäß DHCP und/oder ATM ist.

3. Verfahren nach Anspruch 2, wobei das Senden und Angeben zusammen mit dem Austauschen von Nachrichten zwischen der Verarbeitungsentität (10) und der SDN-Steuerentität (20) zum Einrichten eines Tunnels zwischen der Anwenderentität und einer weiteren Anwenderentität ausgeführt wird.

4. Verfahren nach Anspruch 1, wobei
die spezifische Funktion eine Adressenzuteilung für eine Netzentität ist.

5. Verfahren nach Anspruch 4,
wobei das Senden und Angeben zusammen mit dem Austauschen von Nachrichten zwischen der Verarbeitungsentität (10) und der SDN-Steuerentität (20) zum Einrichten eines Tunnels zwischen der Netzentität und einer weiteren Netzentität ausgeführt wird.

6. Verfahren nach Anspruch 1, wobei
die spezifische Funktion eine Adressenzuteilung für eine Anwenderentität gemäß DHCP und/oder ATM und für eine Netzentität ist.

7. Verfahren nach Anspruch 6,
wobei das Senden und Angeben zusammen mit dem Austauschen von Nachrichten zwischen der Verarbeitungsentität (10) und der SDN-Steuerentität (20) zum Einrichten eines Tunnels zwischen der Anwenderentität und der Netzentität ausgeführt wird.

8. Verfahren nach einem der Ansprüche 1 bis 7, wobei
die Ladung des Wrapper-Protokolls DHCP-Pakete und/oder DNS-Protokollpakete und/oder PCEP-Pakete umfasst.

9. Verfahren nach einem der Ansprüche 1 bis 8, wobei eine Anwenderebene und eine Steuerebene in der Verarbeitungsentität getrennt sind.

10. Computerprogrammprodukt, das ein Programm für eine Verarbeitungsvorrichtung enthält, wobei das Programm Softwarecodeteile umfasst, die bewirken, dass die Verarbeitungsvorrichtung die Schritte nach einem der Ansprüche 1 bis 9 ausführt, wenn das Programm auf der Verarbeitungsvorrichtung läuft.

11. Computerprogrammprodukt nach Anspruch 10, wobei das Computerprogrammprodukt ein computerlesbares Medium umfasst, auf dem die Softwarecodeteile gespeichert sind.

12. Computerprogrammprodukt nach Anspruch 10, wobei das Programm direkt in einen internen Speicher der Verarbeitungsvorrichtung ladbar ist.

13. System zum Unterstützen von Mandantenfähigkeit in einer softwaredefinierten Vernetzung, SDN, wobei das System eine Verarbeitungsentität (10), eine SDN-Steuerentität (20) und eine dienende Entität (30) umfasst, wobei
die Verarbeitungsentität (10) Folgendes umfasst:
Mittel zum Senden einer Anforderung an eine SDN-Steuerentität (20) eines virtuellen Netzsystems, um eine spezifische Funktion für eine Anwendung, die durch die Verarbeitungsentität (10) verarbeitet wird, auszuführen, wobei ein existierendes Protokoll, um die spezifische Funktion aufzurufen, als Schnittstelle zwischen der Verarbeitungsentität (10) und der SDN-Steuerentität (20) wiederverwendet wird; und
Mittel zum Angeben einer Identifizierung eines Betreibers eines virtuellen Netzes, der der Anwendung zugeordnet ist, für die SDN-Steuerentität (20);
wobei die SDN-Steuerentität Folgendes umfasst:
Mittel zum Empfangen der Anforderung; und
Mittel zum Ausführen der spezifischen Funktion anhand der Identifizierung des Betreibers des virtuellen Netzes,
wobei die SDN-Steuerentität (20) konfiguriert ist, die Anforderung und die Identifizierung des Betreibers des virtuellen Netzes in ein Wrapper-Protokoll zwischen der SDN-Steuerentität (20) und der dienenden Entität (30), die die spezifische Funktion bereitstellt, einzuschließen und die Anforderung, die in dem Wrapper-Protokoll enthalten ist, an die dienende Entität (30) zu kommunizieren,
wobei die dienende Entität (30) konfiguriert ist, die Anforderung, die in dem Wrapper-Protokoll enthalten ist, zu empfangen und zu verarbeiten, und eine Antwort auf die Anforderung unter Verwendung des Wrapper-Protokolls an die SDN-Steuerentität (20) zurückzugeben, und
wobei die SDN-Steuerentität (20) konfiguriert ist, die Antwort unter Verwendung des Wrapper-Protokolls zu empfangen, die Antwort zu beurteilen und nachdem sie die Antwort beurteilt hat, auf die von der Verarbeitungsentität (10) empfangene Anforderung zu antworten.

14. System nach Anspruch 13, wobei
die spezifische Funktion eine Adressenzuteilung für eine Anwenderentität gemäß DHCP und/oder ATM ist und
die Mittel zum Senden und die Mittel zum Angeben das Senden und Angeben zusammen mit dem Austauschen von Nachrichten zwischen der Verarbeitungsentität (10) und der SDN-Steuerentität (20) zum Einrichten eines Tunnels zwischen der Anwenderentität und einer weiteren Anwenderentität umfassen.

15. System nach Anspruch 13, wobei
die spezifische Funktion eine Adressenzuteilung für eine Netzentität ist und
die Mittel zum Senden und die Mittel zum Angeben das Senden und Angeben zusammen mit dem Austauschen von Nachrichten zwischen der Verarbeitungsentität (10) und der SDN-Steuerentität (20) zum Einrichten eines Tunnels zwischen der Netzentität und einer weiteren Netzentität umfassen.

16. System nach Anspruch 13, wobei
die spezifische Funktion eine Adressenzuteilung für eine Anwenderentität gemäß DHCP und/oder ATM und für eine Netzentität ist und
die Mittel zum Senden und die Mittel zum Angeben das Senden und Angeben zusammen mit dem Austauschen von Nachrichten zwischen der Verarbeitungsentität (10) und der SDN-Steuerentität (20) zum Einrichten eines Tunnels zwischen der Anwenderentität und der Netzentität umfassen.

17. System nach einem der Ansprüche 13 bis 16, wobei
die dienende Entität ein DHCP-Server und/oder ein DNS und/oder ein PCE-Server und/oder ein Diameter-Server und/oder ein H.248-Server ist.

18. System nach einem der Ansprüche 13 bis 17, wobei
die Verarbeitungsentität (10) eine Verarbeitungsvorrichtung und/oder -anwendung umfasst und/oder
die SDN-Steuerentität (20) eine SDN-Steuervorrichtung und/oder -anwendung umfasst und/oder
die Netzentität eine Netzvorrichtung und/oder -anwendung umfasst und/oder
die Anwenderentität eine Anwendervorrichtung und/oder -anwendung umfasst und/oder
die dienende Entität (30) eine dienende Vorrichtung und/oder -anwendung umfasst.

## Revendications

1. Procédé pour supporter la multilocation dans une mise en réseau définie par logiciel, SDN, le procédé comprenant :
l'envoi d'une demande (S1), par une entité de traitement (10), à une entité de commande de SDN (20) d'un système de réseau virtuel, pour exécuter une fonction spécifique pour une application traitée par l'entité de traitement (10), où un protocole existant pour appeler la fonction spécifique est réutilisé comme interface entre l'entité de traitement (10) et l'entité de commande de SDN (20) ; et
l'indication (S1), par l'entité de traitement (10), d'une identification d'un opérateur de réseau virtuel associé avec l'application à l'entité de commande de SDN (20) ;
la réception (S1), par l'entité de commande de SDN (20), de ladite demande ;
l'exécution (S2), par l'entité de commande de SDN (20), de la fonction spécifique basée sur l'identification de l'opérateur de réseau virtuel,
où l'entité de commande de SDN (20) inclut la demande et l'identification de l'opérateur de réseau virtuel dans un protocole enveloppant entre l'entité de commande SDN (20) et une entité de service (30) fournissant la fonction spécifique, et communique la demande incluse dans le protocole enveloppant à l'entité de service (30) ;
la réception (S3) et le traitement (S4), par l'entité de service (30), de la demande incluse dans le protocole enveloppant ;
le renvoi (S5), par l'entité de service (30), à l'entité de commande de SDN (20), d'une réponse à la demande en utilisant le protocole enveloppant ;
la réception (S5), par l'entité de commande de SDN (20), de la réponse en utilisant le protocole enveloppant ;
l'évaluation (S6), par l'entité de commande de SDN (20), de la réponse ; et
après avoir évalué la réponse, la réponse (S7), par l'entité de commande de SDN (20), à la demande reçue de l'entité de traitement (10).

2. Procédé selon la revendication 1, dans lequel :
la fonction spécifique est une allocation d'adresse pour une entité d'utilisateur selon au moins un protocole parmi DHCP et ATM.

3. Procédé selon la revendication 2, dans lequel l'envoi et l'indication sont effectués conjointement avec l'échange de messages entre l'entité de traitement (10) et l'entité de commande de SDN (20) pour établir un tunnel entre l'entité utilisateur et une autre entité utilisateur.

4. Procédé selon la revendication 1, dans lequel :
la fonction spécifique est une allocation d'adresse pour une entité réseau.

5. Procédé selon la revendication 4, dans lequel l'envoi et l'indication sont effectués conjointement avec l'échange de messages entre l'entité de traitement (10) et l'entité de commande de SDN (20) pour établir un tunnel entre l'entité réseau et une autre entité réseau.

6. Procédé selon la revendication 1, dans lequel :
la fonction spécifique est une allocation d'adresse pour une entité utilisateur selon au moins l'un des protocoles DHCP et ATM et pour une entité réseau.

7. Procédé selon la revendication 6, dans lequel l'envoi et l'indication sont effectués conjointement avec l'échange de messages entre l'entité de traitement (10) et l'entité de commande de SDN (20) pour établir un tunnel entre l'entité utilisateur et l'entité réseau.

8. Procédé selon l'une quelconque des revendications 1 à 7, dans lequel :
la charge utile du protocole enveloppant comprend au moins un paquet parmi des paquets DHCP, des paquets de protocole DNS et des paquets PCEP.

9. Procédé selon l'une quelconque des revendications 1 à 8, dans lequel le plan utilisateur et le plan de commande sont séparés dans l'entité de traitement.

10. Produit programme informatique comprenant un programme pour un dispositif de traitement, ledit programme comprenant des parties de code logiciel amenant le dispositif de traitement à exécuter les étapes de l'une quelconque des revendications 1 à 9 lorsque le programme est exécuté sur le dispositif de traitement.

11. Produit programme informatique selon la revendication 10, dans lequel le produit programme informatique comprend un support lisible par ordinateur sur lequel les parties de code logiciel sont stockées.

12. Produit programme informatique selon la revendication 10, dans lequel le programme peut être chargé directement dans une mémoire interne du dispositif de traitement.

13. Système pour supporter la multilocation dans une mise en réseau définie par logiciel, SDN, le système comprenant une entité de traitement (10), une entité de commande de SDN (20) et une entité de service (30), où l'entité de traitement (10) comprend :
des moyens pour envoyer une demande à une entité de commande de SDN (20) d'un système de réseau virtuel, pour exécuter une fonction spécifique pour une application traitée par l'entité de traitement (10), où un protocole existant pour appeler la fonction spécifique est réutilisé comme interface entre l'entité de traitement (10) et l'entité de commande de SDN (20) ; et
des moyens pour indiquer une identification d'un opérateur de réseau virtuel associé avec l'application à l'entité de commande de SDN (20),
l'entité de commande de SDN comprend :
des moyens pour recevoir la demande ; et
des moyens pour exécuter la fonction spécifique sur la base de l'identification de l'opérateur de réseau virtuel,
où l'entité de commande de SDN (20) est configurée pour inclure la demande et l'identification de l'opérateur de réseau virtuel dans un protocole enveloppant entre l'entité de commande de SDN (20) et l'entité de service (30) fournissant la fonction spécifique, et communiquer la demande incluse dans le protocole enveloppant à l'entité de service (30),
où l'entité de service (30) est configurée pour recevoir et traiter la demande incluse dans le protocole enveloppant, et renvoyer une réponse à la demande à l'entité de commande de SDN (20) en utilisant le protocole enveloppant, et
où l'entité de commande de SDN (20) est configurée pour recevoir la réponse en utilisant le protocole enveloppant, évaluer la réponse et, après avoir évalué la réponse, répondre à la demande reçue de l'entité de traitement (10).

14. Système selon la revendication 13, dans lequel :
la fonction spécifique est une allocation d'adresse pour une entité d'utilisateur selon au moins un protocole parmi DHCP et ATM, et
les moyens d'envoi et les moyens d'indication comprennent l'envoi et l'indication conjointement avec l'échange de messages entre l'entité de traitement (10) et l'entité de commande de SDN (20) pour établir un tunnel entre l'entité utilisateur et une autre entité utilisateur.

15. Système selon la revendication 13, dans lequel :
la fonction spécifique est une allocation d'adresse pour une entité de réseau, et
les moyens d'envoi et les moyens d'indication comprennent l'envoi et l'indication conjointement avec l'échange de messages entre l'entité de traitement (10) et l'entité de commande SDN (20) pour établir un tunnel entre l'entité réseau et une autre entité réseau.

16. Système selon la revendication 13, dans lequel
la fonction spécifique est une allocation d'adresse pour une entité d'utilisateur selon au moins l'un parmi DHCP et ATM et pour une entité réseau, et
les moyens d'envoi et les moyens d'indication comprennent l'envoi et l'indication conjointement avec l'échange de messages entre l'entité de traitement (10) et l'entité de commande de SDN (20) pour établir un tunnel entre l'entité utilisateur et l'entité réseau.

17. Système selon l'une quelconque des revendications 13 à 16, dans lequel :
l'entité de service est au moins un serveur parmi les suivants : un serveur DHCP, un DNS, un serveur PCE, un serveur Diameter et un serveur H.248.

18. Système selon l'une quelconque des revendications 13 à 17, dans lequel :
l'entité de traitement (10) comprend un dispositif de traitement et/ou une application de traitement, et/ou l'entité de commande de SDN (20) comprend un dispositif de commande de SDN et/ou une application de commande de SDN, et/ou
l'entité réseau comprend un dispositif réseau et/ou une application réseau, et/ou
l'entité utilisateur comprend un dispositif utilisateur et/ou une application utilisateur, et/ou l'entité de service (30) comprend un dispositif de service et/ou une application de service.
